# EUROPÄISCHE PATENTSCHRIFT

(11) **EP 0 463 438 B1**
(45) Veröffentlichungstag und Bekanntmachung des Hinweises auf die Patenterteilung: **09.11.1994**
(21) Anmeldenummer: 91109415.9
(22) Anmeldetag: 08.06.1991
(51) Int. Cl.: B01D 61/44, C25B 1/22

(54) **Chromsäure-Herstellung unter Verwendung von bipolaren Membranen**
Chromic acid manufacture using bipolar membranes
Production d'acide chromique avec utilisation de membranes bipolaires

(30) Priorität: 23.06.1990 DE 4020051
(43) Veröffentlichungstag der Anmeldung: 02.01.1992
(73) Patentinhaber: BAYER AG, 51368 Leverkusen (DE)
(72) Erfinder: Klotz, Helmut, Dr., W-5060 Bergisch Gladbach 2 (DE); Weber, Rainer, Dr., W-5090 Leverkusen 1 (DE); Ohlendorf, Wolfgang, Dr., W-5090 Leverkusen 1 (DE)

(56) Entgegenhaltungen:
- EP-A- 0 124 007
- GB-A- 2 051 868

## Beschreibung

Die Erfindung betrifft ein Verfahren zur Herstellung von Alkalidichromaten und Chromsäure durch Elektrolyse von Alkalimonocbromat- oder Alkalidichromat-Lösungen.

Gemäß US-A-3 305 463 und CA-A-739 447 erfolgt die elektrolytische Herstellung von Dichromaten und Chromsäure in Elektrolysezellen, deren Elektrodenräume durch Kationenaustauschermembranen getrennt sind. Bei der Erzeugung von Alkalidichromaten werden Alkalimonochromatlösungen oder -suspensionen in den Anodenraum der Zelle eingeleitet und in eine Alkalichromatlösung umgewandelt, in dem Alkaliionen selektiv durch die Membran in den Kathodenraum überführt werden. Zur Herstellung von Chromsäure werden Alkalidichromat- oder Alkalimonochromatlösungen oder eine Mischung von Alkalidichromat- und Alkalimonochromatlösungen in den Anodenraum eingeleitet und in Chromsäure-haltige Lösungen überführt. In der Regel kommen für diese Prozesse Natriummonochromat und/oder Natriumdichromat zum Einsatz. Im Kathodenraum wird bei beiden Prozessen eine alkalische Alkaliionen-haltige Lösung erhalten, die beispielsweise aus einer wäßrigen Natriumhydroxidlösung oder, wie in der CA-A-739 447 beschrieben, aus einer wäßrigen Natriumcarbonat-haltigen Lösung bestehen kann.

Zur Erzeugung von Alkalidichromat- oder Chromsäurekristallen werden die in den Anodenräumen der Zellen gebildeten Lösungen eingeengt, wobei die Kristallisation von Natriumdichromat beispielsweise bei 80°C und die von Chromsäure bei 60-100°C erfolgen kann. Die auskristallisierten Produkte werden abgetrennt, gegebenenfalls gewaschen und getrocknet.

Anodenmaterialien aus Blei- und Bleilegierungen, entsprechend DE-A-3 020 260 sind zwar prinzipiell geeignet, geben aber Bleiionen in die anodische Lösung ab, was zu Verunreinigungen in den hergestellten Alkalidichromaten und Chromsäure führt. Allen sogenannten dimensionsstabilen Anoden, z.B. beschrieben in DE-A-3 020 260, bestehend aus einem Ventilmetall wie Titan, überzogen mit einer elektrokatalytisch aktiven Schicht aus Edelmetall oder einem Edelmetalloxid, haftet der Nachteil an, daß sie insbesondere bei höheren Temperaturen oberhalb 60°C und Stromdichten zwischen 2-5 KA/m² nur eine begrenzte Lebensdauer unter 100 Tagen aufweisen. Es hat nicht an Bemühungen gefehlt, solche Anoden auf der Basis Ventilmetall mit beständigeren katalytisch wirksamen Überzügen zu versehen, beispielsweise beschrieben in DE-A-3 829 119 oder DE-A-3 905 082. So wurde eine Verlängerung der Standzeit der Edelmetallüberzüge durch geeignete Zwischenschichten erreicht. Diese Zwischenschichten sind aber keineswegs ausreichend, daß die Anodenbeschaffung wirtschaftlich vernachlässigbar wird im Rahmen des Gesamtverfahrens. Die zeitliche Begrenzung der Lebensdauer solcher Anoden wird letztendlich, vergl. DE-A-3 905 082, darin gesehen, daß das Ventilmetall durch Permeation von Sauerstoff durch die elektroaktive Schicht passiviert wird und der Edelmetallüberzug abgespalten wird.

Diese enge zeitliche Begrenzung der Standzeit von Anoden auf Ventilmetallbasis entfällt durch das erfindungsgemäße Elektrolyseverfahren zur Herstellung von Alkalichromaten und Chromsäure, bei dem die Anoden nur noch einer Beanspruchung unterliegen, die einer normalen Wasserelektrolyse entsprechen. Nach A. Schmidt. Angewandte Elektrochemie Verlag Chemie 1976 S. 123 erlaubt die Wasserelektrolyse mit alkalischem Elektrolyt den Einsatz von Nickel oder Eisen.

Überraschenderweise wurde nun gefunden, daß der Einsatz von Metallen oder Legierungen wie Eisen oder Nickel als Anoden dann möglich ist, wenn der Anodenraum durch eine bipolare Ionenaustauschermembran von der Dichromat- und/oder Chromsäure-haltigen Lösung getrennt ist. Vorteilhaft ist darüberhinaus die drastische Reduzierung der Anzahl von Elektroden überhaupt. Eine bipolare Membran ist im Prinzip eine Kombination einer Kationen- und einer Anionenaustauschermembran. Durch Diffusion in die Grenzschicht eindringendes Wasser wird dissoziiert, wobei die H⁺-Ionen durch die Kationenseite und die OH⁻-Ionen durch Anionenseite der Membran nach außen gelangten. Solche bipolare Membranen sind beschrieben worden von
- Nagasubramanian et. al., AIChE Symp. Ser. 76(192)97-104
- US-P 4 355 116 vom 19.10.1982.

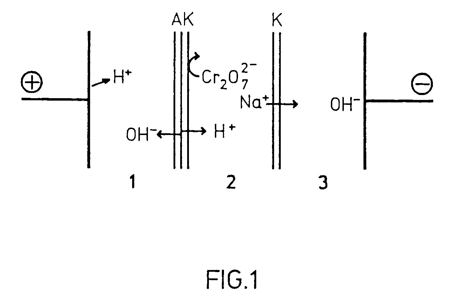

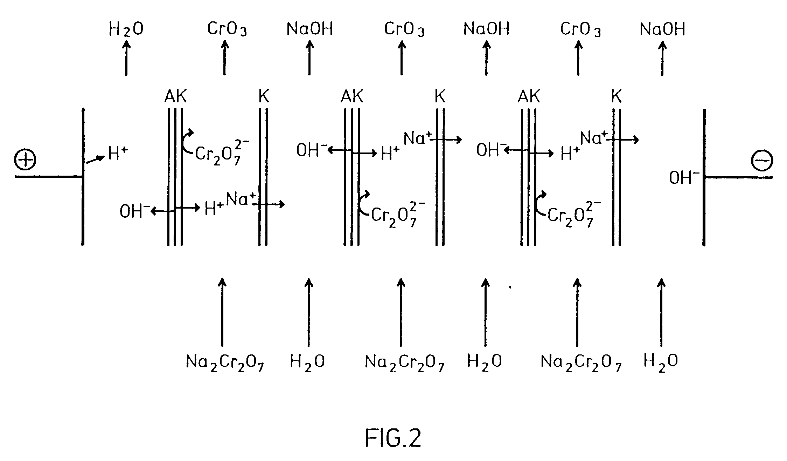

Das erfindungsgemäße Verfahren wird in Fig. 1 bzw. 2 dargestellt. Die Zelle besteht z.B. aus 3 Kammern, (Kammer 1, 2 und 3, vergl. Fig. 2) die durch eine bipolare Membran und eine Kationenaustauschemembran getrennt sind. Die Anordnung beider Membranen ist in Fig. 1 dargestellt. In die Kammer 2 fließt eine wäßrige Lösung von Alkalidichromat, Alkalimonochromat oder eine Mischung von Alkalidichromat und Alkalimonochromat. Aus der Kammer 2 werden selektiv Alkali-Ionen durch die Kationenaustauschermembran "K" in die Kammer 3 überführt. Mit Hilfe des in der Kammer 3 gebildeten Hydroxylionen kommt es zur Bildung von Alkalihydroxidlösung, die aus dieser Kammer laufend abgezogen wird. Die aus der Kammer 2 nach Kammer 3 überführten Alkali-Ionen werden durch H⁺-Ionen aus der Wasserdissoziation ersetzt, die an der Grenzfläche in den bipolaren Membranen entstehen.

Insofern erfolgt eine zunehmende Absäuerung der Chromate, die zur Bildung von Dichromat und Chromsäure führt. Im Sinne der Erfindung sperrt die bipolare Membran durch ihr selektives Verhalten den Eintritt von Monochromat- und Dichiomationen, sowie den Eintritt von Chromsäure in den Anodenraum. Aus der Wasserdissoziation innerhalb der Sandwichmembran stammen die Hydroxylionen, die zusammen mit den Protonen der Wasserzersetzung Wasser bilden. Da alle beschriebenen Stofftransporte in technischer Größenordnung nur durch Stromfluß erfolgen, müssen zusätzlich Ladungsträger in die Anodenkammer eingebracht werden, weil Wasser selbst den elektrischen Strom nur wenig leitet. Als Ladungsträger dient eine verdünnte Natronlauge, die durch das Anodenabteil gepumpt wird. Die Anode besteht bekanntermaßen aus vernickeltem Eisen, die Kathode aus Nickel oder aus sonst einem in der Wasserelektrolyse üblichen Metall. Die bipolaren Membranen bestehen in ihrer Grundsubstanz vorzugsweise aus perfluorierten Verbindungen, wie sie für den kationischen Teil beispielsweise unter der Bezeichnung Nafion® beschrieben werden. Der anionische Teil weist eine Struktur auf, wie sie in EP-A 0 221 751 beschrieben ist.

Die in Fig. 1 gezeigte Zelle stellt nur eine Einheit dar. Es ist möglich, viele solcher "Monozellen" zu einem Block zusammenzufassen, Fig. 2. Die Kombination vieler "Monozellen" führt zu einer Abnahme der Elektrodenzahl.

Die bevorzugte Ausführungsform der vorliegenden Erfindung besteht darin, daß zwischen Anode und Kathode einer Elektrolysezelle alternierend eine Vielzahl von bipolaren Membranen und Kationenaustäuschermembranen angeordnet sind, die die Zelle in eine Vielzahl von gegeneinander abgetrennten Räumen unterteilen, in die alternierend Wasser (bzw. verdünnte Natronlauge) und Natriumbichromat-Lösung eingeführt werden und aus denen entsprechend Natronlauge und Chromsäure/Natriumbichromat-Lösung abgezogen werden. In dem die Anode enthaltenden Raum wird verdünnte Natronlauge umgepumpt. Da nur in dem die Anode enthaltenden Raum (Sauerstoff) und in dem die Kathode enthaltenden Raum (Wasserstoff) Gase entstehen, kann der Abstand zwischen bipolarer Membran und Kationenaustauscher-Membran in den übrigen Räumen sehr klein gehalten werden. Erfindungsgemäß ist ein Abstand von 0,5 bis 2 mm zwischen den Membranen ausreichend.

Der elektrische Widerstand einer solchen Zelle ist im wesentlichen durch die notwendigen Potentialdifferenzen zur Erzeugung von Hydroxyl- und Wasserstoffionen bestimmt. Die notwendige Potentialdifferenz an der Anode und an der Kathode ohne Berücksichtigung von Material-bedingten Überspannungen beträgt etwa 2V für die elektrochemische Zersetzung von Wasser, während die notwendige Potentialdifferenz über der bipolaren Membran jeweils nur etwa 0,6 V für die Dissoziation von Wasser beträgt.

Der Energieverbrauch einer Elektrolysezelle, in welcher das erfindungsgemäße Verfahren durchgeführt wird, ist daher um so günstiger, je mehr Membranen zwischen Anode und Kathode angeordnet werden.

Aus technischen Gründen ist erfindungsgemäß eine Anzahl von 5 bis 20 bipolaren Membranen und 5 bis 20 Kationenaustauschermembranen bevorzugt, so daß die Elektrolysezelle in (2n+1) = 11 bis 41 Räume unterteilt ist.

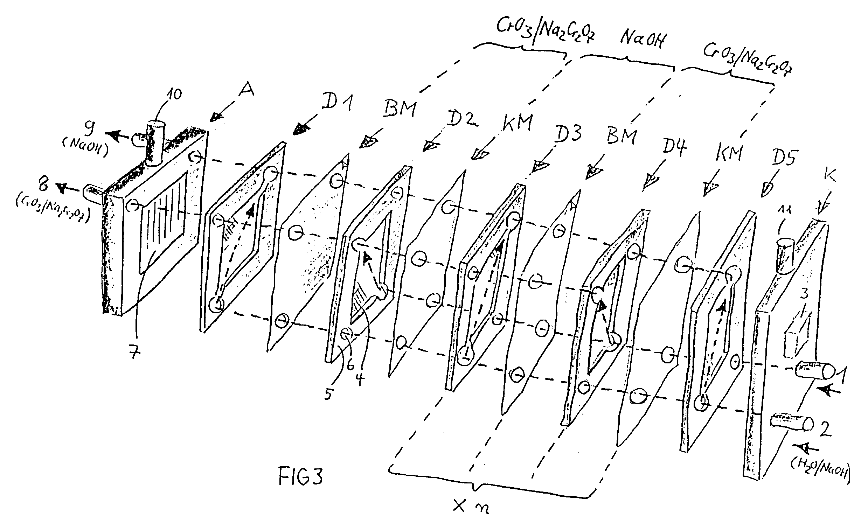

Fig. 3 zeigt eine Elektrolysezelle, in welcher das erfindungsgemäße Verfahren durchgeführt wird. Diese besteht aus einem Anodenblock A, Kathodenaustauschermembran KM, bipolarer Membran BM, einem Kathodenblock K sowie Distanzteilen D. Die Elemente BM, KM und D weisen in den vier Ecken Durchgangsbohrungen für die zufließenden Materialströme Wasser bzw. verdünnte Natronlauge und Natriumbichromatlösung und die abfließenden Materialströme Natronlauge und Chromsäure/Natriumchromatlösung auf. Die Pfeile zeigen beispielhalt die Flußrichtung der Materialströme an. Die Distanzteile D, die einerseits den Abstand zwischen den Membranen gewährleisten und andererseits der Verteilung der Materialströme dienen, bestehen aus einem relativ grobmaschigen, flüssigkeitsdurchlässigen PTFE-Gewebe 4, auf das am Rand Abstands- und Dichtungsflächen 5 mit einer Dicke von ca. 1 mm aufvulkansiert sind. Jeweils 2 diagonal gegenüberliegende Durchflußbohrungen 6 sind gegen den durch die offene Gewebfläche definierten Elektrolyseraum abgedichtet.

Die jeweils anderen beiden Durchflußbohrungen 6 erlauben die diagonale Durchströmung des Elektrolyseraumes.

Erfindungsgemäß sind die Gruppen der Elemente KM, D₁, BM, D₂ 5 bis 10 mal vorhanden. Bei 1 wird Natriumbichromatlösung zugeführt, durchtritt die Durchgangsbohrung in der benachbarten Ecke der Kationsaustauscher-Membran KM, durchströmt die durch D₄ definierten Elektrolyseräume diagonal, wobei Chromsäure erzeugt wird. Das entstehende Chromsäure/Natriumbichromat-Gemisch wird bei 8 aus der Zelle abgezogen. Wasser bzw. verdünnte Natronlauge wird bei 2 zugeführt, durchströmt diagonal den Anodenraum (D₅), und die durch D₃ definierten Elektrolyseräume. Angereicherte Natronlauge wird bei 9 abgezogen. Das an der Kathode entstehende Wasserstoffgas tritt bei 11 aus. Der an der Anode entstehende Sauerstoff tritt bei 10 aus. Nicht gezeichnet ist die Vorrichtung zum Zusammenpressen der Elemente A, n(KM, D , BM, D ), und K. 3 bezeichnet den Stromanschluß für die Anode. 7 bezeichnet die in Form eines Gitters ausgebildete Kathode.

### Beispiel

Es wurde eine Versuchselektrolysezelle entsprechend Fig. 3 mit einer Querschnittsabmessung von Anode, Kathode und Gewebe 4 von 100 x 100 mm² eingesetzt. Die Kathionenaustauschermembran KM war eine Nafion®324 der Fa. Du Pont. Als bipolare Membran wurde eine von WSI Technologies, Inc, St. Louis, MO, USA erhältliche Membran eingesetzt.

Die Zelle enthielt 5 Membranen von jeder Sorte. Es wurde eine Lösung von 800 g/l Na₂Cr₂O₇/l und Wasser eingeleitet. Die Stromstarke betrug 15 Å. Zwischen Anode und Kathode wurde eine Spannung zwischen 10 und 12 V gemessen. Der Absäueningsgrad der abgezogenen Chromsäuren/Natriumbichromatlösung betrug 27,4%. Außerdem entstand eine 15%ige Natronlauge, die zur Gewährleistung der Leitfähigkeit durch beide Elektrodenräume abfloß.

Sowohl Anode als auch Kathode bestanden aus Eisen.

## Patentansprüche

1. Verfahren zur elektrolytischen Herstellung von Alkalichromaten und Chromsäure, wobei in einer Elektrolysezelle, welche durch mindestens ein Membranenpaar aus einer bipolaren Membran (AK) und einer auf deren Kathodenseite angeordneten Kationenaustauschermembran (K) in mindestens drei Kammern (1,2,3) aufgeteilt ist, und in der von den beiden Membranen (AK, K) begrenzten Kammer (2) der Elektrolysezelle Alkalimonochromat- und/oder Alkalidichromatlösung zugeführt wird, wobei die Alkaliionen aus Kammer (2) selektiv durch eine Kationenaustauschermembran (K) in die Kathodenkammer (3) und die OH⁻-Ionen selektiv durch die bipolare Membran (AK) in die Anodenkammer (1) überführt werden, wodurch die Anodenkammer (1) gegen den Zutritt von Alkalichromat und Chromsäure geschützt ist.

2. Verfahren nach Anspruch 1, dadurch gekennzeichnet, daß die Elektrolysezelle durch eine Vielzahl von alternierend angeordneten Kationenaustauschermembranen (K) und bipolaren Membranen (AK) in eine Vielzahl von Kammern aufgeteilt ist, wobei jeweils einer Kammer, die anodenseitig durch eine bipolare Membran (AK) begrenzt ist, Alkalichromatlösung und einer Kammer, die anodenseitig durch eine (K)-Membran begrenzt ist, Wasser zugeführt wird.

3. Verfahren nach Anspruch 1 oder 2, dadurch gekennzeichnet, daß der Anodenkammer (1) eine Alkalilösung zugeführt wird.

## Claims

1. A process for the electrolytic production of alkali metal chromates and chromic acid, in which - in an electrolysis cell divided into at least three compartments (1,2,3) by at least one membrane pair of a bipolar membrane (AK) and a cation exchanger membrane (K) arranged on the cathode side thereof - alkali metal monochromate and/or alkali metal dichromate solution are introduced into the compartment (2) of the electrolysis cell defined by the two membranes (AK,K), the alkali metal ions being selectively transferred from compartment (2) to the cathode compartment (3) through a cation exchanger membrane (K) and the OH ions being selectively transferred to the anode compartment (1) through the bipolar membrane (AK) so that the anode compartment (1) is protected against the entry of alkali metal chromate and chromic acid.

2. A process as claimed in claim 1, characterized in that the electrolysis cell is divided into a number of compartments by a number of alternately arranged cation exchanger membranes (K) and bipolar membranes (AK), alkali metal chromate solution being delivered to a compartment defined by a bipolar membrane (AK) on the anode side and water being delivered to a compartment defined by a (K) membrane on the anode side.

3. A process as claimed in claim 1 or 2, characterized in that an alkali solution is delivered to the anode compartment (1).

## Revendications

1. Procédé de production électrolytique de chromates alcalins et d'acide chromique, selon lequel dans une cellule d'électrolyse, qui est subdivisée par au moins une paire de membranes formée d'une membrane bipolaire (AK) et d'une membrane (K) échangeuse de cations disposée du côté cathodique en au moins trois compartiments (1, 2, 3), et dans le compartiment (2) de cette cellule d'électrolyse, délimitée par les deux membranes (AK, K) est introduit une solution de monochromate alcalin et/ou de dichromate alcalin, les ions alcalins sortant du compartiment (2) traversant sélectivement une membrane (K) d'échange de cations présente dans le compartiment (3) cathodique et les ions OH⁻traversant sélectivement la membrane bipolaire (AK) présente dans le compartiment (1) anodique, de sorte que le compartiment anodique (1) est protégé à l'encontre de l'entrée de chromate alcalin et d'acide chromique.

2. Procédé selon la revendication 1, caractérisé en ce que la cellule d'électrolyse est subdivisée en un grand nombre de compartiments par un grand nombre de membranes (K) échangeuses de cations et de membranes bipolaires (AK), disposées en alternance, avec à chaque fois introduction d'une solution de chromate alcalin dans un compartiment qui, du côté anodique, est délimité par une membrane bipolaire (AK) et introduction d'eau dans un compartiment qui est délimité, du côté anodique, par une membrane (K).

3. Procédé selon la revendication 1 ou 2, caractérisé en ce qu'une solution alcaline est introduite dans le compartiment anodique (1).
